# EUROPEAN PATENT SPECIFICATION

(11) **EP 4 401 389 B1**
(45) Date of publication and mention of the grant of the patent: **18.03.2026**
(21) Application number: 23814880.3
(22) Date of filing: 05.05.2023
(51) Int. Cl.: H04M 1/02, B32B 5/26, B32B 7/12, B32B 9/00

(54) **5D CERAMIC SHELL STRUCTURE AND 5D CERAMIC MACHINING PROCESS METHOD**
5D-KERAMIKSCHALENSTRUKTUR UND VERFAHREN ZUR 5D-KERAMIKBEARBEITUNG
STRUCTURE DE COQUE EN CÉRAMIQUE 5D ET PROCÉDÉ DE TRAITEMENT D'USINAGE EN CÉRAMIQUE 5D

(30) Priority: 30.05.2022 CN 202210602481
(43) Date of publication of application: 17.07.2024
(73) Proprietor: Honor Device Co., Ltd., Shenzhen, Guangdong 518040 (CN)
(72) Inventor: GAO, Chengjie, Shenzhen, Guangdong 518040 (CN); WANG, Xuyang, Shenzhen, Guangdong 518040 (CN); WU, Wenbo, Shenzhen, Guangdong 518040 (CN)
(74) Representative: Beder, Jens
(86) International application number: PCT/CN2023/092302
(87) International publication number: WO 2023/231694

(56) References cited:
- CN-A- 110 733 098
- CN-A- 110 733 098
- CN-A- 112 248 339
- CN-A- 112 297 544
- CN-A- 113 199 825
- CN-A- 113 199 825
- CN-A- 113 473 781
- CN-A- 113 873 062
- CN-U- 215 975 569
- US-A1- 2018 070 463

## Description

### TECHNICAL FIELD

This application relates to the field of ceramic processing processes, and in particular, to a 5D ceramic housing structure and a 5D ceramic processing process method.

### BACKGROUND

With popularization and application of a terminal, various terminal housings are generated. In existing terminals that various materials are used in, a 5D (5 Dimensions) structure ceramic has high product recognition and a high-grade appearance, and is the ultimate choice for high-end flagship products. A mobile phone is used as an example, in the existing 5D forming solutions that have been mass-produced in the industry, for example, as the following forming process steps: dry pressing performed on a clay body; sintering; CNC (Computer numerical control) (clamping for five times, about 80 minutes); and polishing (six times, about 175 minutes). Machining time for the CNC and polishing is long, so that production costs of a housing of the mobile phone are high, and production efficiency is low. Document CN 113 199 825 A describes a shell assembly comprising a ceramic matrix, an adhesion promoter layer and a fiber reinforced resin layer connected with the ceramic matrix through the adhesion promoter layer. Document CN 112 248 339 A describes a shell manufacturing method comprising the steps of preparing a ceramic plate, of paving prepreg in a mold and stacking the ceramic plate on the prepreg, and of carrying out hot press molding on the ceramic plate and the prepreg together, embedding the ceramic plate into the prepreg, manufacturing a shell through aftertreatment and exposing the ceramic plate. Document CN 113 873 062 A describes a shell comprising a shell main body and a protection piece. Document CN 110 733 098 A describes a 3D ceramic shell and a preparation method thereof and electronic equipment.

### SUMMARY

To resolve the foregoing technical problems, this application provides a 5D ceramic housing structure and a 5D ceramic processing process method. In the method, a raw ceramic material is sequentially subjected to casting, pre-sintering of a flat ceramic sheet, 5D heat-bend forming, and fiber prepreg adhesion. In this way, processing time for overall process can be reduced, to reduce production costs of a product. The 5D ceramic housing structure can be formed by using the foregoing processing process method. The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

According to a first aspect, this application provides a 5D ceramic housing structure, including a ceramic sheet and multi-layer prepreg fibers adhering to an inner surface of the ceramic sheet. For example, the ceramic sheet adhered with a fiber structure is used to relieve brittleness performance of the ceramic sheet, and increase processibility of the ceramic housing structure.

According to the first aspect, the ceramic sheet in the 5D ceramic housing structure provided in this application includes a first area and a second area. The second area surrounds the first area. Thickness of the ceramic sheet located at the first area is equal to thickness of the ceramic sheet located at the second area. Alternatively, thickness of the ceramic sheet located at the first area is smaller than the thickness of the ceramic sheet located at the second area.

For example, the thickness of the ceramic sheet provided in this application may be identical thickness or different thickness. This is not limited in this application. That the thickness of the ceramic sheet in this application is identical thickness may be understood that the ceramic sheet has equal thickness with a specific error.

According to the first aspect or any one of the above implementations in the first aspect, the 5D ceramic housing structure provided in this application further includes an adhesive layer, and the adhesive layer is located between the ceramic sheet and the multi-layer prepreg fibers.

For example, the ceramic sheet and the multi-layer prepreg fibers are connected to each other by using the adhesive layer, to achieve stability of an overall ceramic housing structure, and reduce brittleness performance of the ceramic sheet.

According to the first aspect or any one of the above implementations in the first aspect, the multi-layer prepreg fibers are modified prepreg resin.

For example, the modified prepreg resin has bonding force of adhering the ceramic housing and the multi-layer prepreg fibers.

According to the first aspect or any one of the above implementations in the first aspect, the 5D ceramic housing structure includes a first protruding structure protruding from an outer plane of cameras.

According to the first aspect or any one of the above implementations in the first aspect, the first protruding structure protruding from the plane includes a crater-liked structure located at the cameras of an electronic device. The crater-liked structure is a flared housing structure that is narrow at a top and wide at a bottom. A center of the flared housing structure is provided with a through hole that is communicated with the cameras and that is configured to provide viewfinder light. An inner wall of the through hole is provided with a second protruding structure protruding from the inner wall and extending toward the center of the flared housing structure.

For example, the foregoing 5D ceramic housing structure can be formed by using the ceramic housing and a structure adhered with the modified prepreg resin provided in the first aspect of this application, and more 5D appearance can be achieved. The foregoing 5D ceramic housing structure can be manufactured by using a solution of the 5D ceramic processing process method in this application, but is limited to the foregoing 5D ceramic housing structure, another 5D ceramic housing structure may alternatively be formed. Structures, shape, and sizes of the another 5D ceramic housing structure are not limited in this application.

According to the first aspect or any one of the above implementations in the first aspect, the second protruding structure is an integral annular protruding structure formed along the inner wall. Alternatively, the second protruding structure includes a plurality of independent protruding structures formed along the inner wall, and the plurality of independent protruding structures are disposed at intervals.

For example, the second protruding structure is configured to fit a structure of the cameras of the electronic device, and can be used as a protecting housing of the cameras.

According to the first aspect or any one of the above implementations in the first aspect, the multi-layer prepreg fibers have identical thickness of 0.25 mm to 0.35 mm. Alternatively, thickness of at least part of area of the multi-layer prepreg fibers is 0.1 mm to 0.3 mm.

The foregoing identical thickness or different thickness fiber structure is used to match appearance designs of different positions on the electronic device.

According to the first aspect or any one of the above implementations in the first aspect, a surface that is of the multi-layer prepreg fibers and that is adhered to the ceramic sheet is provided with an accommodating recess configured to accommodate an antenna; and/or a surface that is of the multi-layer prepreg fibers and that is configured to contact with an inner element of the electronic device is provided with a relief recess.

For example, specific structures, shapes, and sizes of the accommodating recess or the relief recess are not limited in this application, as long as a function of accommodating a built-in antenna or receiving an interference structure can be achieved.

According to a second aspect, a 5D ceramic processing process method provided in this application can form the foregoing 5D ceramic housing. The method includes: obtaining a raw ceramic material, that is, a ceramic powder; performing casting processing on the raw ceramic material to obtain a to-be-sintered green-state ceramic sheet; performing flat ceramic sheet pre-sintering on the green-state ceramic sheet to obtain a sintered product with a shrinkage rate of 18% to 23%; performing 5D heat-bend forming on the sintered product to enable the sintered product to be further crystallized and deformed by heating to form a ceramic sheet; performing fiber adhesion on the ceramic sheet; and forming the foregoing 5D ceramic housing structure.

Using the foregoing ceramic processing process, 5D ceramic appearance profile can be formed at one time, reducing a large amount of processing time of a CNC machine in conventional processes. In addition, strength of a product is reinforced by using fiber adhesion, so that a weight of a ceramic product can be reduced. In this way, processing time can be reduced from overall to reduce production costs of a product.

According to the second aspect, in the step of performing casting processing on the raw ceramic material to obtain a to-be-sintered green-state ceramic sheet, thickness of a cast ceramic sheet in the casting processing is 0.25 mm to 0.45 mm.

For example, the thickness of the cast ceramic sheet in the casting processing is 0.3 mm.

According to the second aspect or any one of the above implementations in the second aspect, in the step of performing casting processing on the raw ceramic material to obtain a to-be-sintered green-state ceramic sheet, the casting processing is replaced with dry-pressing flat ceramic sheet.

According to the second aspect or any one of the above implementations in the second aspect, in the step of performing flat ceramic sheet pre-sintering on the green-state ceramic sheet to obtain a sintered product with a shrinkage rate of 18% to 23%, sintering conditions of the flat ceramic sheet pre-sintering includes: a pre-sintering temperature is 1200°C to 1400°C, and time for thermal preservation is 60 mins to 120 mins.

For example, the sintering conditions of the flat ceramic sheet pre-sintering includes: the pre-sintering temperature is 1300°C, and the time for thermal preservation is 80 mins.

According to the second aspect or any one of the above implementations in the second aspect, in the step of performing 5D heat-bend forming on the sintered product to enable the sintered product to be further crystallized and deformed by heating to form a ceramic sheet, thickness of the ceramic housing is 0.25 mm to 0.45 mm.

According to the second aspect or any one of the above implementations in the second aspect, in the step of performing 5D heat-bend forming on the sintered product, to enable the sintered product to be further crystallized and deformed by heating to form a ceramic housing, a process of the 5D heat-bend forming includes three processes of heating, thermal preservation, and cooling.

For example, a highest temperature during the process of heating of the 5D heat-bend forming is lower than or equal to 1400°C, and time for heating is 5 h to 7 h. Time for thermal preservation is 1 h to 2 h. A lowest temperature during the process of cooling is 50°C to 100°C, time for cooling is 5 h to 8 h.

For example, in the step of 5D heat-bend forming, a mold material of zirconia-toughened alumina oxide ceramic is used.

According to the second aspect or any one of the above implementations in the second aspect, in the step of performing fiber adhesion on the ceramic sheet, adhesive is used to adhere the ceramic housing and multi-layer fibers. A main component of the adhesive includes polar groups and non-polar groups both.

For example, thickness of the adhesive is 0.02 mm to 0.08 mm.

According to the second aspect or any one of the above implementations in the second aspect, in the step of performing fiber adhesion on the ceramic sheet, an adhesive film is used to adhere the ceramic housing and multi-layer fibers. A main component of the adhesive film includes polar groups and non-polar groups both.

For example, thickness of the adhesive film is 0.02 mm to 0.08 mm.

According to the second aspect or any one of the above implementations in the second aspect, in the step of performing fiber adhesion on the ceramic sheet, multi-layer prepreg fibers are used, the multi-layer prepreg fibers include a plurality of stacked single-layer prepreg fibers, each single-layer prepreg fibers include prepreg resin and prepreg fibers soaked in the prepreg resin. The prepreg resin is directly modified prepreg resin, and the directly modified prepreg resin has bonding force of adhering the ceramic housing and the multi-layer prepreg fibers.

According to the second aspect or any one of the above implementations in the second aspect, in the step of performing fiber adhesion on the ceramic housing, and in the step of performing fiber adhesion on the ceramic sheet, the single-layer prepreg fibers are glass fibers and/or basalt fibers. According to the first aspect or any one of the above implementations in the first aspect, single-layer prepreg fibers are arranged in an alternating manner of woven fibers and unidirectional fibers. Alternatively, single-layer prepreg fibers are arranged in a manner of woven fibers.

According to the second aspect or any one of the above implementations in the second aspect, in the step of performing fiber adhesion on the ceramic sheet, the single-layer prepreg fibers with content of 35% to 40% of the prepreg resin are chosen.

According to the second aspect or any one of the above implementations in the second aspect, in the step of performing fiber adhesion on the ceramic sheet, thickness of cured multi-layer prepreg fibers is 0.3 mm to 0.45 mm.

According to the second aspect or any one of the above implementations in the second aspect, in the step of performing fiber adhesion on the ceramic sheet, the cured multi-layer prepreg fibers are downgauged in a stepwise manner, and the cured multi-layer prepreg fibers after being downgauged may have thickness of 0.1 mm to 0.3 mm.

According to the second aspect or any one of the above implementations in the second aspect, after the step of performing casting processing on the raw ceramic material to obtain a to-be-sintered green-state ceramic sheet, the method further includes: performing cutting; cutting the green-state ceramic sheet to obtain a cut green-state ceramic sheet.

According to the second aspect or any one of the above implementations in the second aspect, after the step of performing flat ceramic sheet pre-sintering on the green-state ceramic sheet to obtain a sintered product with a shrinkage rate of 18% to 23%, the method further includes: performing flat sheet polishing on the sintered product to obtain a sintered product with enhanced polishing precision.

According to the second aspect or any one of the above implementations in the second aspect, after the step of performing fiber adhesion on the ceramic sheet, the method further includes performing processes of thermoforming, CNC forming, polishing and AF coating in sequence.

According to the second aspect or any one of the above implementations in the second aspect, after the step of performing 5D heat-bend forming on the sintered product to enable the sintered product to be further crystallized and deformed by heating to form a ceramic sheet, the method further includes a process of processing a built-in antenna on a surface of the multi-layer prepreg fibers in the manner of printing conductive silver paste.

According to the second aspect or any one of the above implementations in the second aspect, after the step of performing fiber adhesion on the ceramic sheet, the method further includes performing processes of thermoforming, CNC forming, CNC fibers local downgauging, and polishing in sequence.

According to a third aspect, this application provides a terminal, including the foregoing 5D ceramic housing structure. The 5D ceramic housing structure includes a rear cover assembled on a rear side of the terminal. In this way, all effects of the foregoing 5D ceramic housing structure can be achieved.

### BRIEF DESCRIPTION OF DRAWINGS

FIG. 1 is a schematic diagram of a structure of a 5D ceramic housing structure as an example;
FIG. 2 is a schematic diagram of a different thickness structure of a 5D ceramic housing structure as an example;
FIG. 3 is a first schematic diagram of a structure of fiber adhesion as an example;
FIG. 4 is a second schematic diagram of a structure of fiber adhesion as an example;
FIG. 5 is a schematic diagram of a structure of a 5D ceramic housing structure with a built-in antenna according to an embodiment of this application;
FIG. 6 is a cross-sectional view of a first protruding structure of a 5D ceramic housing structure as an example;
FIG. 7 is a schematic diagram of an enlarged structure of a first protruding structure of a 5D ceramic housing structure as an example;
FIG. 8 is a process procedure of a 5D ceramic processing process method as an example;
FIG. 9 is another process procedure of a 5D ceramic processing process method as an example;
FIG. 10 is yet another process procedure of a 5D ceramic processing process method as an example;
FIG. 11 is still another process procedure of a 5D ceramic processing process method as an example; and
FIG. 12 is a schematic diagram of a structure of single-layer prepreg fibers including woven fibers.

Reference numerals:
1: ceramic sheet; 11: camera; 111: first protruding structure; 1111: second protruding structure; 12: second area; 13: first area;
2: multi-layer prepreg fibers; 21: single-layer prepreg fibers; 211: prepreg resin; 212: woven fiber;
antenna; 4: adhesive; 5: adhesive film.

### DESCRIPTION OF EMBODIMENTS

The technical solutions in embodiments of this application are clearly and completely described below with reference to the accompanying drawings in embodiments of this application. Apparently, the described embodiments are some rather than all of embodiments of this application. All other embodiments obtained by a person of ordinary skill in the art based on embodiments of this application without making creative efforts shall fall within the protection scope of this application.

The term "and/or" used herein describes only an association relationship between associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not indicate a particular sequence of the objects. For example, a first target object, a second target object, and the like are used to distinguish between different target objects, rather than describing a particular sequence of the target objects.

In embodiments of this application, the terms such as "example" or "for example" are used to represent giving an example, an illustration, or a description. Any embodiment or design scheme described as "example" or "for example" in embodiments of this application should not be explained as being more preferred or having more advantages than another embodiment or design scheme. Exactly, use of the terms such as "example" and "for example" is intended to present a related concept in a specific manner.

In the description of embodiments of this application, unless otherwise stated, "a plurality of" means two or more. For example, a plurality of processing units refer to two or more processing units; and a plurality of systems refer to two or more systems.

To provide a clear and concise description of the following embodiments, the terms in this application are explained in the following.

Casting: It is a thin ceramic sheet forming process. First, ground ceramic powders and an organic dispersant solution are mixed in an appropriate ratio to form a slurry with a specific viscosity. The slurry flows down from a container and is applied to a special base tape with specific thickness by a scraper. After drying and solidification, a thin ceramic sheet that is a green tape is peeled off from the base tape, and then the green tape is punched and processed according to a size and shape of a finished product to obtain a to-be-sintered green-state ceramic sheet.

Pre-sintering: It is a sintering process carried out at a temperature lower than a normal sintering temperature to remove lubricants and forming agents from a compact, or to facilitate processing of semi-finished compacts.

Heat-bending: It is deformation of ceramic under a high temperature. To be specific, the heat-bend forming is performed, by using a heat-bending machine, on a ceramic sheet 1 performed fiber adhesion of this application to form 5D ceramic housing structures with different structures, shapes, and sizes.

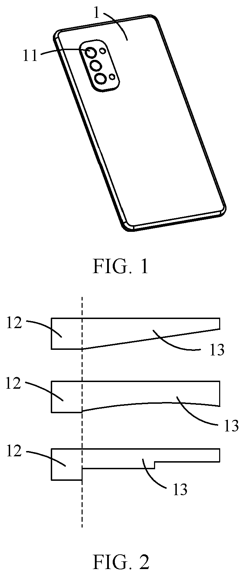

Embodiments of this application provide an electronic device that may be a mobile phone, a tablet computer, a personal digital assistant (personal digital assistant, PDA), a vehicle-mounted computer, a television, a smart wearable device, or the like. A specific form of the electronic device is not specially limited in embodiments of this application. As shown in FIG. 1, for ease of description, an example in which the electronic device is a mobile phone is used for description.

As shown in FIG. 1, the mobile phone includes a display screen, a rear housing, a middle frame between the display screen and the rear housing.

With popularization and application of a terminal, various terminal housings that the ceramic sheet 1 is used in are generated. In existing terminals with various materials, 5D structure ceramic has a high product recognition and a high-grade appearance and is the ultimate choice for high-end flagship products. Using mobile phone as an example, in the existing 5D forming solutions that have been mass-produced in the industry, processes such as dry pressing performed on a clay body, sintering and CNC (clamping for five times, about 80 minutes), and polishing (six times, about 175 minutes) are used for forming a 5D product structure. Machining time for the CNC and polishing is long, so that production costs of a housing of the mobile phone are high, and production efficiency is low. A root cause is that ceramic has high brittleness performance. To resolve existing problems, this application provides the following solutions.

An embodiment of this application provides a 5D ceramic housing structure. Fiber adhesion is performed on a ceramic sheet 1, heat-bend forming is performed on a fiber-adhered ceramic sheet 1, and any needed structure is formed.

The following describes a structure of a ceramic rear housing and a forming process.

Refer to FIG. 2. The 5D ceramic housing structure includes a ceramic sheet and multi-layer prepreg fibers 2 adhering to an inner surface of the ceramic sheet. For example, the ceramic sheet 1 adhered with a fiber structure is used to relieve brittleness performance of the ceramic sheet, and increase processibility of the ceramic housing structure.

The ceramic sheet 1 in the 5D ceramic housing structure provided in this application includes a first area 13 and a second area 12. The second area 12 surrounds the first area 13. Thickness of the ceramic sheet 1 located at the first area 13 is equal to thickness of the ceramic sheet 1 located at the second area 12. Alternatively, thickness of the ceramic sheet 1 located at the first area 13 is smaller than the thickness of the ceramic sheet 1 located at the second area 12. The first area 13 and the second area 12 are both displayed as a thickness cross section of the 5D ceramic housing structure. According to description of a thickness relationship between the first area 13 and the second area 12, thickness of the 5D ceramic housing structure may be processed based on a requirement.

For example, the thickness of the ceramic sheet 1 provided in this application may be identical thickness (where the ceramic sheet itself has even identical thickness, and may not need to be processed in size), or may be different thickness (where the ceramic sheet itself has even identical thickness, and may be processed in size). This is not limited in this application. That the thickness of the ceramic sheet 1 of this application is identical thickness may be understood that the ceramic sheet has equal thickness with a specific error. FIG. 2 shows three forms of a ceramic sheet 2 with different thickness. To be specific, the thickness of the ceramic sheet 1 located at the first area 13 is gradually reduced in a direction away from the second area 12. Alternatively, the thickness of the ceramic sheet 1 located at the first area 13 is gradually changed in a parabolic manner. Alternatively, the thickness of the ceramic sheet 1 located at the first area 12 is gradually reduced in a stepwise manner.

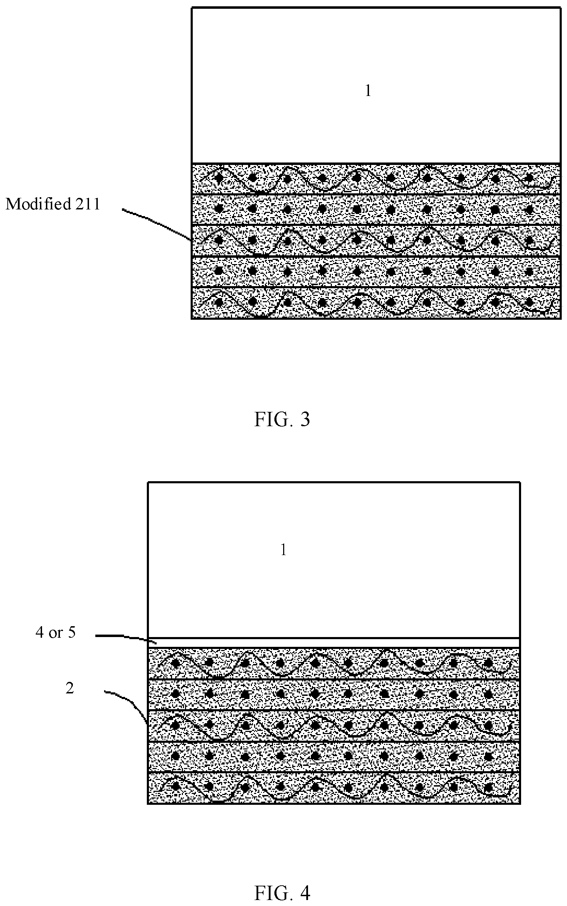

Refer to FIG. 4. The 5D ceramic housing structure provided in this application further includes an adhesive layer, and the adhesive layer is located between the ceramic sheet 1 and the multi-layer prepreg fibers. The adhesive layer may be adhesive 4 or an adhesive film. For a limitation of the adhesive 4 or the adhesive film 5, refer to the description of the processing method solution.

For example, the ceramic sheet 1 and the multi-layer prepreg fibers are connected to each other by using the adhesive layer, to achieve stability of an overall ceramic housing structure, and reduce brittleness performance of the ceramic sheet 1.

The multi-layer prepreg fibers are modified prepreg resin. For example, refer to FIG. 3. The modified prepreg resin has bonding force of adhering the ceramic housing and the multi-layer prepreg fibers.

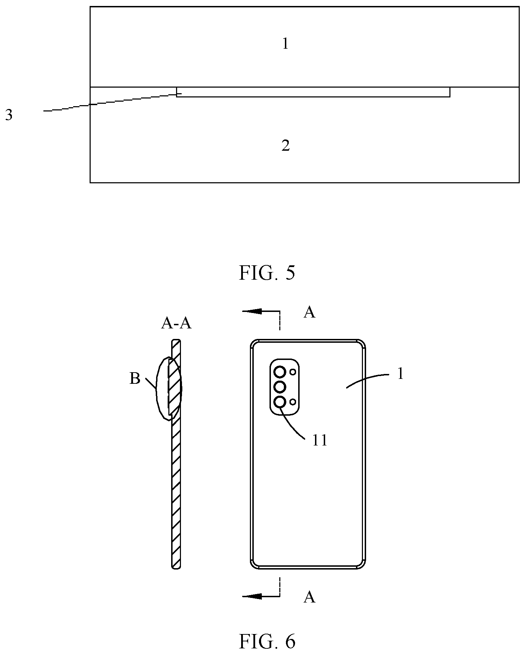

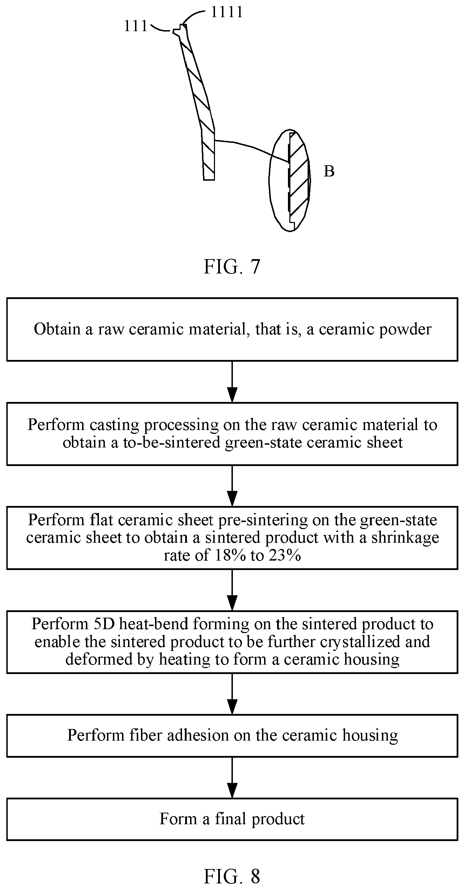

Refer to FIG. 6 and FIG. 7. The 5D ceramic housing structure includes a first protruding structure 111 protruding from an outer plane of cameras. For example, the first protruding structure 111 may be any structure protruding from an outer surface of the ceramic housing. Structures, shapes, and sizes of the protruding structure are not limited in this application.

The first protruding structure 111 protruding from the plane includes a crater-liked structure located at the cameras of an electronic device. The crater-liked structure is a flared housing structure that is narrow at a top and wide at a bottom. A center of the flared housing structure is provided with a through hole that communicates with the cameras and that is configured to provide viewfinder light. An inner wall of the through hole is provided with a second protruding structure 1111 protruding from the inner wall and extending toward a center of the flared housing structure.

For example, the foregoing 5D ceramic housing structure can be formed by using the ceramic housing and a structure adhered with the modified prepreg resin provided in this application, and more 5D appearance can be achieved. The foregoing 5D ceramic housing structure can be manufactured by using a solution of the 5D ceramic processing process method in this application, but is limited to the foregoing 5D ceramic housing structure, another 5D ceramic housing structure may alternatively be formed. Structures, shape, and sizes of the another 5D ceramic housing structure are not limited in this application.

The second protruding structure 1111 is an integral annular protruding structure formed along the inner wall. Alternatively, the second protruding structure 1111 includes a plurality of independent protruding structures formed along the inner wall, and the plurality of independent protruding structures are disposed at intervals.

For example, the second protruding structure 1111 is configured to fit a structure of the cameras of the electronic device, and can be used as a protecting housing of the cameras.

The multi-layer prepreg fibers 2 have identical thickness of 0.25 mm to 0.35 mm. Alternatively, thickness of at least part of area of the multi-layer prepreg fibers 2 is 0.1 mm to 0.3 mm.

The foregoing identical thickness or different thickness fiber structure is used to match appearance designs of different positions on the electronic device.

Refer to FIG. 5. A surface that is of the multi-layer prepreg fibers 2 and that is adhered to the ceramic sheet 1 is provided with an accommodating recess configured to accommodate an antenna 3; and/or a surface that is of the multi-layer prepreg fibers and that is configured to contact with an inner element of the electronic device is provided with a relief recess.

For example, specific structures, shapes, and sizes of the accommodating recess or the relief recess are not limited in this application, as long as a function of accommodating a built-in antenna or receiving an interference structure can be achieved.

The foregoing is the 5D ceramic housing 1 structure. Generally, the 5D ceramic housing structure includes two layers of structures, an appearance surface layer (that is, the ceramic sheet) and a reinforce layer (that is, the multi-layer prepreg fibers 2). The appearance surface layer is a 5D structural ceramic sheet 1 having uniform thickness of 0.25 mm to 0.35 mm. The reinforce layer is a fiber layer adhered to an inner surface of ceramic. For example, the reinforce layer may be a glass fiber layer, a basalt fiber layer, or a composite fiber layer (a composition of the glass fiber layer and the basalt fiber layer). In comparison, a conventional (a dry pressing method) 5D structure product only includes a layer of structure that is a ceramic structure with different thickness and of which thickness around the perimeter is 0.6 mm to 0.75 mm and thickness of a large surface 0.35 mm to 0.45 mm. Thickness of holes of cameras 11 is designed according to needs of the cameras 11 Deco.

Thickness of fibers of a product manufactured by using the process method in embodiments of this application may be identical thickness of 0.3 mm to 0.45 mm, or locally downgauged based on identical thickness of a fiber material, for example, downgauged to 0.1 mm to 0.3 mm. A feature of fiber downgauging is basically stepwise downgauging, and the ceramic belongs to a brittleness material. Downgauging is a slowed-down process. Ceramic downgauging is for reducing overall weight of a product. In addition, the product manufactured by using the process method in embodiments of this application may have the foregoing crater-liked structure and a protruding structure formed at any position of the ceramic housing 1, other than a normal 3D structure. Embodiments of this application further provide a 5D ceramic processing process method, used for manufacturing the foregoing 5D ceramic housing structure. It should be noted that the 5D ceramic housing structure is not limited to the foregoing defined structure, different structures may be obtained according to the method.

Specifically, a solution of the 5D ceramic processing process method provided in this application may include the following.

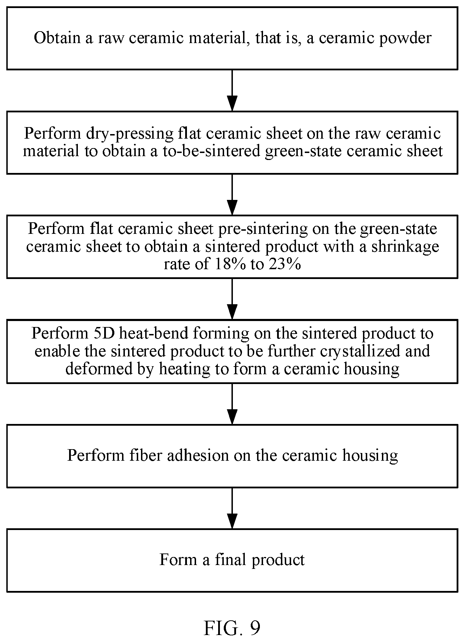

Refer to FIG. 8. A raw ceramic material is obtained, that is, a ceramic powder. Casting processing is performed on the raw ceramic material to obtain a to-be-sintered green-state ceramic sheet. Flat ceramic sheet pre-sintering is performed on the green-state ceramic sheet to obtain a sintered product with a shrinkage rate of 18% to 23%. 5D heat-bend forming is performed on the sintered product to enable the sintered product to be further crystallized and deformed by heating to form a ceramic sheet. Fiber adhesion is performed on the ceramic sheet. A 5D ceramic housing structure is formed. The 5D ceramic housing structure in this application may be any 5D ceramic housing structure suitable for a mobile phone structure. This is not limited in this application. For example, refer to FIG. 9. The casting processing may be replaced with dry-pressing flat ceramic sheet. For example, ceramic 5D appearance profile can be formed at one time by using the step of 5D heat-bend forming, reducing a large amount of processing time of a CNC machine in conventional processes. For example, the step of fiber adhesion can reinforce the strength of a product by using fiber adhesion. In addition, a weight of the product is reduced. In conclusion, processing time can be reduced from overall by using the 5D ceramic processing process method provided in embodiments of this application, so that production costs of a product are reduced.

Specifically, casting processing, that is, ceramic casting, is a thin ceramic sheet forming process. For details, refer to the foregoing description. In the step of casting, focus is on thickness control of cast ceramic sheet. A thickness standard is determined with reference to product thickness requirements, a process processing allowance and a shrinkage rate. For example, thickness of the cast ceramic sheet in the casting processing may be 0.25 mm to 0.45 mm. For example, the thickness of the cast ceramic sheet in the casting processing may be 0.3 mm. To be specific, required thickness of a ceramic product may be 0.3 mm currently, the machining allowance may be 0.13 mm, and a sintering shrinkage rate is 20% to 22%. For example, in the step of performing casting processing on the raw ceramic material to obtain a to-be-sintered green-state ceramic sheet, the casting processing may be replaced with dry-pressing flat ceramic sheet. In this way, a to-be-sintered green-state ceramic sheet can also be obtained. Thickness of the obtained to-be-sintered green-state ceramic sheet may also be 0.25 mm to 0.45 mm. For example, thickness of the to-be-sintered green-state ceramic sheet obtained by performing the dry-pressing flat ceramic sheet may also be 0.3 mm. The following solution in which the casting processing is used as an example for description about subsequent processes.

Specifically, in a process of flat ceramic sheet pre-sintering, the pre-sintering mainly controls a temperature of crystallizing and time for thermal preservation of the crystallizing. This process is different form conventional ceramic sintering. The conventional ceramic is sintered into porcelain at one time in the sintering process. Density of the porcelain reaches density of a final product without shrinking again. The pre-sintering in embodiments of this application may be regarded as pre-sintering after casting process, and can also remain an allowance of additional shrinkage and crystallizing for process of 5D heat-bend forming. Otherwise, cracking and excessive aging of ceramic during the heat-bend forming occurs, resulting in reduction of overall strength of the product. A shrinkage rate of ceramic casting is generally 20% to 22%. In a stage of the pre-sintering, a shrinkage rate of the product may be controlled between 18% and 23%, so that deformation is easier to occur during the 5D heat-bending process, thereby meeting the forming process of complex appearance. In addition, the product also reduces a degree of aging during crystallization of the heat-bending process.

For example, the step of the flat ceramic sheet pre-sintering includes setting a pre-sintering temperature to 1200°C to 1400°C and the time for thermal preservation to 60 mins to 120 mins. Under the pre-sintering temperature and the time for thermal preservation, a shrinkage rate of the product in a stage of the pre-sintering may be controlled between 18% to 23%.

For example, the step of the flat ceramic sheet pre-sintering includes Setting pre-sintering temperature to 1300°C and the time for thermal preservation to 80 mins. Under the setting of the pre-sintering temperature and the time for thermal preservation, optimal data within the foregoing shrinkage rate can be obtained.

Specifically, in the process of 5D heat-bend forming, the following content needs to be considered: First, the ceramic is a brittleness material, and does not have plasticity. A shrinkage rate of the ceramic may be controlled during pre-sintering after casting, and a specific amount of deformation is reserved for the 5D heat-bend forming process to ensure the deformation of the ceramic under a high temperature condition during the heat-bending. Because the amount of deformation of the ceramic is small, thickness of the ceramic directly affects the 5D forming. It is verified that thickness of the 5D forming ceramic is 0.25 mm to 0.45 mm. For example, if the thickness of the ceramic is thin, for example, the thickness is less than 0.25 mm, the ceramic may be shaped by using the solution, but flatness after being heat-bent and flatness during reinforcing fiber adhesion cannot be controlled. For example, if the thickness of the ceramic is thick, for example, the thickness is greater than 0.45 mm, four corners of the product are prone to cracking and the heat-bend forming cannot be performed.

Specifically, in the process of 5D heat-bend forming, the following heat-bending parameters need to be considered. First, heat-bending is a process in which ceramic is heated, softened, and deformed while crystallizing and aging under a high temperature condition. The heat-bending process may be divided into three processes of heating, thermal preservation and deformation, and temperature reduction. A speed of heating or cooling relates to thermal shock resistance of a mold material. To prevent a mold from thermal shock fracture, a rhythm of heating or cooling needs to be controlled. In addition, time for thermal preservation is shortened as much as possible to reduce a degree of ceramic aging. For example, the ceramic aging results in reduction of the strength of the product. For example, time for heating may be 7 h, time for thermal preservation may be 2 h to 3 h, and time for cooling may be 8 h.

For example, in the process of heating in the 5D heat-bend forming, a temperature may be heated up to 1400°C. For example, a highest temperature during heating may alternatively be less than 1400°C. For example, the time for heating may be 5 h to 7 h.

For example, time for thermal preservation and deformation in the thermal preservation process of the 5D heat-bend forming may be 1 h to 2 h. The time for thermal preservation cannot be short. Excessively short thermal preservation duration may cause a heat-bend formed product to be unqualified in dimension.

For example, in the process of cooling in the 5D heat-bend forming, that is, the temperature reduction process, a highest temperature during cooling may be 50°C to 100°C, improving production efficiency of an overall production line and stability of the product. For example, time for cooling during the cooling may be 5 h to 8 h.

Specifically, the process of the 5D heat-bend forming is a process that ceramic is further be crystallized and deformed by heating. A ceramic mold undergoes heating and cooling with the product. The mold need to be used many times, so that it is necessary to choose a material that has good thermal shock resistance and does not chemically react with the ceramic. For the thermal shock resistance, when inherent strength of the material is not enough to resist internal stress caused by thermal expansion or contraction of the material caused by a thermal shock temperature difference ΔT, the material is caused to be fractured instantaneously, that is, the "thermal shock fracture". To avoid a problem of thermal shock fracture, it is necessary to choose a material with good thermal shock resistance. Because the ceramic itself does not undergo chemical reactions, a material with good heat conductivity and a low expansion coefficient is chosen, and generally has good thermal shock resistance. For example, zirconia-toughened alumina oxide ceramic satisfies requirements of mold materials.

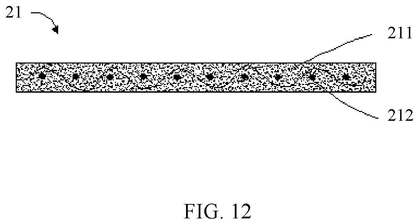

Specifically, in a process of fiber adhesion, the following conditions need to be considered. The adhesive 4 or the adhesive film 5 may have an effect on adhering a ceramic housing 1 to multi-layer fibers. The ceramic is an inorganic non-metal material. An outer surface of the multi-layer fibers mainly is resin, and resin is a macromolecular material. The feature requires that a main component of the adhesive 4 or the adhesive film 5 needs to include polar groups and non-polar groups both. The polar groups have good adhering strength with the ceramic, and the non-polar groups have good adhering force with a fiber material. Alternatively, the multi-layer prepreg fibers 2 are used, the multi-layer prepreg fibers 2 include a plurality of stacked single-layer prepreg fibers 21, single-layer prepreg fibers 21 include prepreg resin 211 and prepreg fibers soaked in the prepreg resin 211. The prepreg resin 211 is directly modified prepreg resin 211, and the directly modified prepreg resin 211 has bonding force of adhering the ceramic sheet and the multi-layer prepreg fibers 2, so that the multi-layer prepreg fibers have good adhering strength with the ceramic sheet, to save the adhesive 4 or the adhesive film 5. In addition, an electronic device product has an extreme requirement for thickness. For example, thickness of the adhesive 4 or the adhesive film 5 may be 0.02 mm to 0.08 mm. This can ensure the adhering strength, and control the thickness in an acceptable range. In addition, thickness of the ceramic sheet and thickness of the multi-layer prepreg fibers 2 are designed based on requirements of product strength. The multi-layer prepreg fibers 2 are mainly used to reinforce strength of the ceramic housing 1, and the multi-layer prepreg fibers 2 are formed by a plurality of single-layer prepreg fibers 21. Therefore, strength of the single-layer prepreg fibers 21 needs to be focused on. However, fiber types of the single-layer prepreg fibers 21, content of the prepreg resin 211, and thickness of cured multi-layer prepreg fibers 2 have the greatest influence on the strength. For example, refer to FIG. 12. An alternating arrangement of woven fibers 212 and unidirectional fibers may be used to satisfy a requirement of unit bending resistance strength, to reinforce the strength. Alternatively, a manner that a plurality of woven fibers 212 are arranged in a multi-layer manner may be used to reinforce the product. For example, the single-layer prepreg fibers 21 are glass fibers and/or basalt fibers. For example, the single-layer prepreg fibers may be separate glass fibers, separate basalt fibers, or a composition of the glass fibers and the basalt fibers. The content of the prepreg resin 211 is generally between 35% to 65%, and the strength is higher when the content of the prepreg resin 211 is low. For example, regardless of which fiber is used, the single-layer prepreg fibers 21 with a content of 35% to 40% of the prepreg resin 211 is chosen for optimal strength. For example, thickness of cured multi-layer prepreg fibers 2 may be 0.3 mm to 0.45 mm.

Specifically, a process of fiber adhesion needs to further consider curing conditions. Different resins need different curing conditions. For example, when used resin is thermosetting epoxy resin, the curing conditions used are 140°C temperature, 10 kg pressure, and 20 minutes pressure holding time.

By using the foregoing processes of casting processing or dry pressing flat ceramic sheet, flat ceramic sheet pre-sintering, 5D heat-bend forming, and fiber adhesion, production efficiency of the product is overall improved and production costs are reduced. Further, the following ceramic housing product can be obtained by using the foregoing processes.

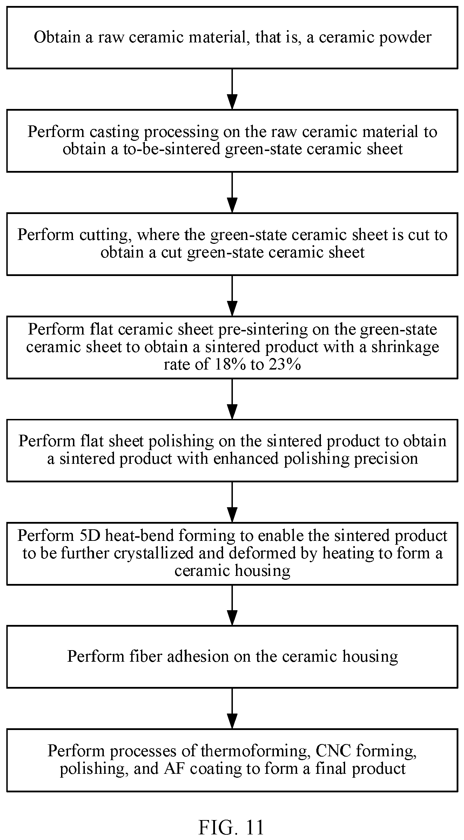

Refer to FIG. 11. A solution of the 5D ceramic processing process method provided in embodiments of this application may include: obtaining a raw ceramic material, that is, a ceramic powder; performing casting processing on the raw ceramic material to obtain a to-be-sintered green-state ceramic sheet; Cutting, where the green-state ceramic sheet is cut to obtain a cut green-state ceramic sheet; performing flat ceramic sheet pre-sintering on the green-state ceramic sheet to obtain a sintered product with a shrinkage rate of 18% to 23%; performing flat sheet polishing on the sintered product to obtain a sintered product with enhanced polishing precision; performing 5D heat-bend forming to enable the sintered product to be further crystallized and deformed by heating to form a ceramic sheet; performing fiber adhesion on the ceramic sheet 1; and performing processes of thermoforming, CNC forming, polishing, and AF coating are performed in sequence to form a 5D ceramic housing 1 structure. For example, steps of flat sheet polishing can reduce polishing time after 5D forming. For example, ceramic 5D appearance profile can be formed at one time by using the step of 5D heat-bend forming, reducing a large amount of processing time of a CNC machine in conventional processes. For example, the step of fiber adhesion can reinforce the strength of a product by using fiber adhesion. In addition, a weight of the product is reduced. In conclusion, processing time can be reduced from overall by using the 5D ceramic processing process method provided in embodiments of this application, so that production costs of a product are reduced.

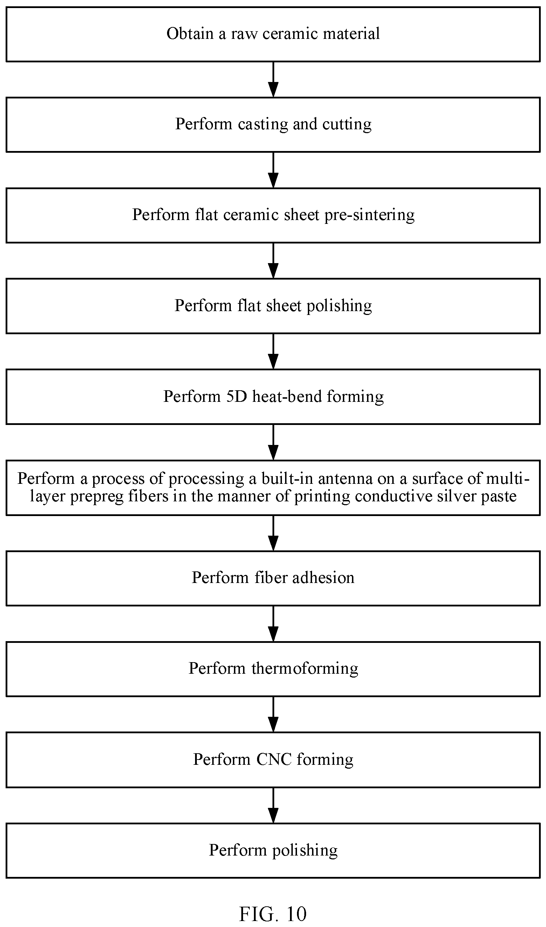

Refer to FIG. 10. Embodiments of this application further provide another 5D ceramic processing process method, including: obtaining a raw ceramic material; performing casting and cutting; performing flat ceramic sheet pre-sintering; performing flat sheet polishing; performing 5D heat-bend forming; performing a process of processing a built-in antenna 3 on a surface of the multi-layer prepreg fibers 2 in the manner of printing conductive silver paste; performing fiber adhesion; performing thermoforming; performing CNC forming; and performing polishing. A process of processing the built-in antenna 3 in the manner of printing conductive silver paste is added after the 5D heat-bend forming is performed on the ceramic, to achieve a same appearance effect as the foregoing process method.

Embodiments of this application further provide still another 5D ceramic processing process method, including: obtaining a raw ceramic material; performing casting; performing cutting; performing flat ceramic sheet pre-sintering; performing 5D heat-bend forming; performing fiber adhesion; performing thermoforming; performing CNC forming; CNC fiber local downgauging; and performing polishing. After the step of the CNC forming, a process of fiber local downgauging is added, to provide a location for receiving a main board structure, thereby avoiding a problem that thickness of an entire machine is increased due to local interference.

Embodiments of this application further provides a terminal, including any foregoing 5D ceramic housing structure manufactured by using the foregoing 5D ceramic processing process method. The 5D ceramic housing structure includes a rear cover assembled on a rear side of the terminal, to achieve all effects of the foregoing 5D ceramic housing structure. Details are not described herein again.

Embodiments of this application are described above with reference to the accompanying drawings. This application is not limited to the specific implementations described above. The specific implementations described above are merely examples rather than limiting this application. A person of ordinary skill in the art may make various variations under the enlightenment of this application without departing from the protection scope of the claims, and such variations shall all fall within the protection scope of this application.

## Claims

1. A 5D ceramic housing structure, comprising a ceramic sheet (1), multi-layer prepreg fibers (2) adhering to an inner surface of the ceramic sheet (1) via an adhesive layer, and a first protruding structure (111), wherein,
the ceramic sheet (1) comprising a first area (13) and a second area (12) surrounding the first area (13); thickness of the ceramic sheet (1) in the first area (13) is equal to or smaller than thickness of the ceramic sheet (1) in the second area (12);
the first protruding structure (111) protruding from an outer plane of cameras;
**characterised in that**
the first protruding structure (111) protruding from the plane comprises a crater-liked structure located at the cameras of an electronic device, the crater-liked structure is a flared housing structure that is narrow at a top and wide at a bottom, a center of the flared housing structure is provided with a through hole that is communicated with the cameras and that is configured to provide viewfinder light, and an inner wall of the through hole is provided with a second protruding structure (1111) protruding from the inner wall and extending toward the center of the flared housing structure.

2. The 5D ceramic housing structure according to claim 1, wherein the multi-layer prepreg fibers (2) are modified prepreg resin (211), wherein the modified prepreg resin (211) has bonding force of adhering the 5D ceramic housing and the multi-layer prepreg fibers (2).

3. The 5D ceramic housing structure according to claim 1, wherein the second protruding structure (1111) is an integral annular protruding structure formed along the inner wall; or the second protruding structure (1111) comprises a plurality of independent protruding structures formed along the inner wall, and the plurality of independent protruding structures are disposed at intervals.

4. The 5D ceramic housing structure according to claim 1 or 2, wherein the multi-layer prepreg fibers (2) have identical thickness of 0.25 mm to 0.35 mm.

5. The 5D ceramic housing structure according to claim 1 or 2, wherein thickness of at least part of area of the multi-layer prepreg fibers (2) is 0.1 mm to 0.3 mm.

6. The 5D ceramic housing structure according to any one of claims 1 to 5, wherein a surface that is of the multi-layer prepreg fibers (2) and that is adhered to the ceramic sheet (1) is provided with an accommodating recess configured to accommodate an antenna; and/or a surface that is of the multi-layer prepreg fibers (2) and that is configured to contact with an inner element of the electronic device is provided with a relief recess.

7. A 5D ceramic processing process method for preparing the 5D ceramic housing structure according to any one of claims 1 to 5, comprising:
obtaining a raw ceramic material, that is, a ceramic powder;
performing casting processing on the raw ceramic material to obtain a to-be-sintered green-state ceramic sheet;
performing flat ceramic sheet pre-sintering on the green-state ceramic sheet to obtain a sintered product with a shrinkage rate of 18% to 23%;
performing 5D heat-bend forming on the sintered product to enable the sintered product to be further crystallized and deformed by heating to form a ceramic sheet (1);
performing fiber adhesion on the ceramic sheet (1); and
forming a 5D ceramic housing structure.

8. The method according to claim 7, wherein in the step of performing casting processing on the raw ceramic material to obtain a to-be-sintered green-state ceramic sheet, thickness of a cast ceramic sheet in the casting processing is 0.25 mm to 0.45 mm.

9. The method according to claim 8, wherein in the step of performing casting processing on the raw ceramic material to obtain a to-be-sintered green-state ceramic sheet, the thickness of the cast ceramic sheet in the casting processing is 0.3 mm.

10. The method according to claim 7, wherein in the step of performing casting processing on the raw ceramic material to obtain a to-be-sintered green-state ceramic sheet, the casting processing is replaced with dry-pressing the flat ceramic sheet.

11. The method according to any one of claims 7 to 10, wherein in the step of performing 5D heat-bend forming on the sintered product to enable the sintered product to be further crystallized and deformed by heating to form a ceramic sheet, thickness of the ceramic sheet is 0.25 mm to 0.45 mm.

12. The method according to any one of claims 7 to 11, wherein in the step of performing 5D heat-bend forming on the sintered product to enable the sintered product to be further crystallized and deformed by heating to form a ceramic sheet (1), a process of the 5D heat-bend forming comprises three processes of heating, thermal preservation, and cooling; a highest temperature during the process of heating of the 5D heat-bend forming is lower than or equal to 1400°C, and time for heating is 5 h to 7 h; time for thermal preservation is 1 h to 2 h; and a highest temperature during the process of cooling is 50°C to 100°C, and time for cooling is 5 h to 8 h.

13. The method according to any one of claims 7 to 12, wherein in the step of performing fiber adhesion on the ceramic sheet (1), multi-layer prepreg fibers (2) are used, the multi-layer prepreg fibers (2) comprise a plurality of stacked single-layer prepreg fibers (21), each single-layer prepreg fibers (21) comprise prepreg resin (211) and prepreg fibers soaked in the prepreg resin (211), the prepreg resin (211) is directly modified prepreg resin, and the directly modified prepreg resin (211) has bonding force of adhering the ceramic sheet (1) and the multi-layer prepreg fibers (2).

14. A terminal, comprising the 5D ceramic housing structure according to any one of claims 1 to 5, wherein the 5D ceramic housing structure comprises a rear cover assembled on a rear side of the terminal.

## Patentansprüche

1. 5D-Keramikgehäusestruktur, umfassend eine Keramikplatte (1), mehrlagige Prepreg-Fasern (2), die mittels einer Klebeschicht an einer Innenseite der Keramikplatte (1) haften, und eine erste hervorstehende Struktur (111), wobei
die Keramikplatte (1) einen ersten Bereich (13) und einen zweiten Bereich (12), der den ersten Bereich (13) umgibt, aufweist; die Dicke der Keramikplatte (1) im ersten Bereich (13) ist gleich oder kleiner als die Dicke der Keramikplatte (1) im zweiten Bereich (12);
die erste hervorstehende Struktur (111) steht aus einer äußeren Ebene der Kameras hervor;
**dadurch gekennzeichnet, dass**
die erste hervorstehende Struktur (111), die aus der Ebene herausragt, eine kraterartige Struktur aufweist, die an den Kameras eines elektronischen Geräts liegt, wobei die kraterartige Struktur ein ausgestelltes Gehäuse bildet, das oben schmal und unten breit ist, wobei sich im Zentrum des ausgestellten Gehäuses ein Durchgangsloch befindet, das mit den Kameras in Verbindung steht und zur Bereitstellung von Sucherlicht vorgesehen ist, und dessen Innenwand mit einer zweiten hervorstehenden Struktur (1111) versehen ist, die von der Innenwand hervorsteht und sich auf das Zentrum des ausgestellten Gehäuses erstreckt.

2. Die 5D-Keramikgehäusestruktur nach Anspruch 1, wobei die mehrlagigen Prepreg-Fasern (2) modifiziertes Prepreg-Harz (211) sind, wobei das modifizierte Prepreg-Harz (211) eine Haftkraft zum Verbinden des 5D-Keramikgehäuses und der mehrlagigen Prepreg-Fasern (2) aufweist.

3. Die 5D-Keramikgehäusestruktur nach Anspruch 1, wobei die zweite hervorstehende Struktur (1111) eine integrale ringförmige hervorstehende Struktur ist, die entlang der Innenwand geformt ist; oder die zweite hervorstehende Struktur (1111) umfasst eine Vielzahl unabhängiger hervorstehender Strukturen, die entlang der Innenwand gebildet sind und in Abständen angeordnet sind.

4. Die 5D-Keramikgehäusestruktur nach Anspruch 1 oder 2, wobei die mehrlagigen Prepreg-Fasern (2) eine identische Dicke von 0,25 mm bis 0,35 mm aufweisen.

5. Die 5D-Keramikgehäusestruktur nach Anspruch 1 oder 2, wobei die Dicke mindestens eines Bereichs der mehrlagigen Prepreg-Fasern (2) 0,1 mm bis 0,3 mm beträgt.

6. Die 5D-Keramikgehäusestruktur nach einem der Ansprüche 1 bis 5, wobei eine Oberfläche der mehrlagigen Prepreg-Fasern (2), die an der Keramikplatte (1) haftet, mit einer Aufnahmekerbe ausgestattet ist, die zur Aufnahme einer Antenne dient; und/oder eine Oberfläche der mehrlagigen Prepreg-Fasern (2), die zum Kontakt mit einem inneren Bauteil des elektronischen Gerätes vorgesehen ist, mit einer Entlastungskerbe versehen ist.

7. Ein 5D-Keramikverarbeitungsverfahren zur Herstellung der 5D-Keramikgehäusestruktur gemäß einem der Ansprüche 1 bis 5, umfassend:
Gewinnen eines keramischen Rohmaterials, also eines Keramikpulvers;
Durchführen des Gießverfahrens mit dem keramischen Rohmaterial, um ein zu sinterndes, im Grünzustand befindliches Keramikplättchen zu erhalten;
Vor-Sintern des flachen Keramikplättchens im Grünzustand, um ein gesintertes Produkt mit einer Schwindungsrate von 18 % bis 23 % zu erhalten;
Ausführen der 5D-Hitzebiegeformung des gesinterten Produkts, sodass das gesinterte Produkt durch Erhitzen weiter kristallisiert und verformt wird, um ein Keramikplättchen (1) zu bilden;
Durchführen der Faseranhaftung an dem Keramikplättchen (1); und
Bildung einer 5D-Keramikgehäusestruktur.

8. Verfahren nach Anspruch 7, wobei in dem Schritt des Gießverfahrens mit dem keramischen Rohmaterial zur Herstellung eines zu sinternden, im Grünzustand befindlichen Keramikplättchens die Dicke eines gegossenen Keramikplättchens im Gießprozess 0,25 mm bis 0,45 mm beträgt.

9. Verfahren nach Anspruch 8, wobei in dem Schritt des Gießverfahrens mit dem keramischen Rohmaterial zur Herstellung eines zu sinternden, im Grünzustand befindlichen Keramikplättchens die Dicke des gegossenen Keramikplättchens im Gießprozess 0,3 mm beträgt.

10. Verfahren nach Anspruch 7, wobei in dem Schritt des Gießverfahrens mit dem keramischen Rohmaterial zur Herstellung eines zu sinternden, im Grünzustand befindlichen Keramikplättchens das Gießverfahren durch das Trockenpressen des flachen Keramikplättchens ersetzt wird.

11. Verfahren nach einem der Ansprüche 7 bis 10, wobei in dem Schritt der 5D-Hitzebiegeformung des gesinterten Produkts, bei dem das gesinterte Produkt durch Erhitzen weiter kristallisiert und verformt wird, sodass ein Keramikplättchen entsteht, die Dicke des Keramikplättchens 0,25 mm bis 0,45 mm beträgt.

12. Verfahren nach einem der Ansprüche 7 bis 11, wobei im Schritt der 5D-Hitzebiegeformung des gesinterten Produkts, bei dem das gesinterte Produkt durch Erhitzen weiter kristallisiert und verformt wird, um ein Keramikplättchen (1) zu formen, ein Prozess der 5D-Hitzebiegeformung drei Prozessschritte umfasst: Erhitzen, Temperaturhalten und Abkühlen; die höchste Temperatur während des Erhitzens beim 5D-Hitzebiegen beträgt maximal 1400 °C und die Erhitzungszeit liegt zwischen 5 h und 7 h; die Zeit zum Halten der Temperatur beträgt 1 h bis 2 h; und die höchste Temperatur während des Abkühlens liegt zwischen 50 °C und 100 °C und die Abkühlungsdauer beträgt 5 h bis 8 h.

13. Verfahren nach einem der Ansprüche 7 bis 12, wobei in dem Schritt des Ausführens der Faseradhäsion auf dem Keramikblech (1) mehrlagige Prepreg-Fasern (2) verwendet werden, wobei die mehrlagigen Prepreg-Fasern (2) eine Mehrzahl von gestapelten einlagigen Prepreg-Fasern (21) umfassen, wobei jede einlagige Prepreg-Faser (21) Prepreg-Harz (211) und in das Prepreg-Harz (211) getränkte Prepreg-Fasern umfasst, wobei das Prepreg-Harz (211) ein direkt modifiziertes Prepreg-Harz ist und das direkt modifizierte Prepreg-Harz (211) eine Haftkraft besitzt, die das Keramikblech (1) und die mehrlagigen Prepreg-Fasern (2) miteinander verbindet.

14. Endgerät, umfassend die 5D-Keramikgehäusestruktur nach einem der Ansprüche 1 bis 5, wobei die 5D-Keramikgehäusestruktur eine auf der Rückseite des Endgeräts angebrachte Rückabdeckung umfasst.

## Revendications

1. Une structure de boîtier en céramique 5D, comprenant une feuille de céramique (1), des fibres de préimprégné multicouches (2) adhérant à une surface intérieure de la feuille de céramique (1) via une couche adhésive, et une première structure en saillie (111), dans laquelle,
la feuille de céramique (1) comprend une première zone (13) et une seconde zone (12) entourant la première zone (13) ; l'épaisseur de la feuille de céramique (1) dans la première zone (13) est égale ou inférieure à l'épaisseur de la feuille de céramique (1) dans la seconde zone (12) ;
la première structure en saillie (111) fait saillie à partir d'un plan extérieur des caméras ;
**caractérisé en ce que**
la première structure en saillie (111) dépassant du plan comprend une structure en cratère située au niveau des caméras d'un dispositif électronique, la structure en cratère étant une structure de boîtier évasée étroite en haut et large en bas, un centre de la structure de boîtier évasée est muni d'un orifice traversant communiqué avec les caméras et configuré pour fournir une lumière de viseur, et une paroi interne de l'orifice traversant comporte une deuxième structure en saillie (1111) dépassant de la paroi interne et s'étendant vers le centre de la structure de boîtier évasée.

2. La structure de boîtier en céramique 5D selon la revendication 1, dans laquelle les fibres de préimprégné multicouches (2) sont une résine de préimprégné modifiée (211), ladite résine de préimprégné modifiée (211) possédant une force d'adhérence permettant d'assembler le boîtier en céramique 5D aux fibres de préimprégné multicouches (2).

3. Structure de boîtier en céramique 5D selon la revendication 1, dans laquelle la deuxième structure en saillie (1111) est une structure annulaire saillante intégrée formée le long de la paroi interne ; ou la deuxième structure en saillie (1111) comprend une pluralité de structures saillantes indépendantes formées le long de la paroi interne, et cette pluralité de structures saillantes indépendantes sont disposées à intervalles.

4. Structure de boîtier en céramique 5D selon la revendication 1 ou 2, dans laquelle les fibres de préimprégné multicouches (2) présentent une épaisseur identique de 0,25 mm à 0,35 mm.

5. Structure de boîtier en céramique 5D selon la revendication 1 ou 2, dans laquelle l'épaisseur d'au moins une partie de la zone des fibres de préimprégné multicouches (2) est de 0,1 mm à 0,3 mm.

6. Structure de boîtier en céramique 5D selon l'une quelconque des revendications 1 à 5, dans laquelle une surface qui fait partie des fibres de préimprégné multicouches (2) et qui est collée à la feuille de céramique (1) comporte un évidement d'accueil configuré pour loger une antenne ; et/ou une surface qui fait partie des fibres de préimprégné multicouches (2) et qui est conçue pour être en contact avec un élément interne du dispositif électronique comporte un évidement de dégagement.

7. Procédé de traitement céramique 5D pour préparer la structure de boîtier en céramique 5D selon l'une quelconque des revendications 1 à 5, comprenant :
l'obtention d'une matière première céramique, c'est-à-dire une poudre céramique ;
la réalisation d'un moulage par coulage sur la matière première céramique afin d'obtenir une feuille céramique à l'état vert devant être frittée ;
la réalisation d'un pré-frittage de la feuille céramique plate à l'état vert afin d'obtenir un produit fritté avec un taux de retrait de 18 % à 23 % ;
la réalisation d'un formage thermocourbé 5D sur le produit fritté afin de permettre à celui-ci d'être davantage cristallisé et déformé par chauffage pour former une feuille céramique (1) ;
l'adhésion de fibres sur la feuille céramique (1) ; et
la formation d'une structure de boîtier en céramique 5D.

8. Procédé selon la revendication 7, dans lequel lors de l'étape de moulage par coulage sur la matière première céramique pour obtenir une feuille céramique à l'état vert devant être frittée, l'épaisseur d'une feuille céramique coulée lors du moulage est comprise entre 0,25 mm et 0,45 mm.

9. Procédé selon la revendication 8, dans lequel lors de l'étape de moulage par coulage sur la matière première céramique pour obtenir une feuille céramique à l'état vert devant être frittée, l'épaisseur de la feuille céramique coulée lors du moulage est de 0,3 mm.

10. Procédé selon la revendication 7, dans lequel lors de l'étape de moulage par coulage sur la matière première céramique pour obtenir une feuille céramique à l'état vert devant être frittée, le moulage par coulage est remplacé par un pressage à sec de la feuille céramique plate.

11. Procédé selon l'une quelconque des revendications 7 à 10, dans lequel lors de l'étape de formage thermocourbé 5D du produit fritté pour qu'il soit davantage cristallisé et déformé par chauffage pour former une feuille céramique, l'épaisseur de la feuille céramique est comprise entre 0,25 mm et 0,45 mm.

12. Procédé selon l'une quelconque des revendications 7 à 11, dans lequel lors de l'étape de formage thermocourbé 5D du produit fritté pour qu'il soit davantage cristallisé et déformé par chauffage pour former une feuille céramique (1), le procédé de formage thermocourbé 5D comprend trois étapes de chauffage, de maintien thermique et de refroidissement ; la température maximale pendant l'étape de chauffage du formage thermocourbé 5D est inférieure ou égale à 1400°C, et la durée du chauffage est de 5 à 7 heures ; la durée pour le maintien thermique est de 1 à 2 heures ; et la température maximale pendant la phase de refroidissement est comprise entre 50°C et 100°C, et la durée du refroidissement est de 5 à 8 heures.

13. Le procédé selon l'une quelconque des revendications 7 à 12, dans lequel, lors de l'étape d'adhésion de fibres sur la feuille céramique (1), des fibres de préimprégné multicouches (2) sont utilisées, les fibres de préimprégné multicouches (2) comprenant une pluralité de fibres de préimprégné monocouches (21) empilées, chaque fibre de préimprégné monocouche (21) comprenant une résine de préimprégné (211) et des fibres de préimprégné imprégnées dans la résine de préimprégné (211), la résine de préimprégné (211) étant une résine de préimprégné modifiée directement, et la résine de préimprégné modifiée directement (211) possédant une force d'adhérence permettant de coller la feuille céramique (1) et les fibres de préimprégné multicouches (2).

14. Un terminal, comprenant la structure de boîtier en céramique 5D selon l'une quelconque des revendications 1 à 5, la structure de boîtier en céramique 5D comprenant un couvercle arrière assemblé sur la face arrière du terminal.
